# FASCICULE DE BREVET EUROPEEN

(11) **EP 2 454 067 B1**
(45) Date de publication et mention de la délivrance du brevet: **04.12.2013**
(21) Numéro de dépôt: 10752012.4
(22) Date de dépôt: 13.07.2010
(51) Int. Cl.: B29C 33/00, F16L 41/08, F16L 41/14

(54) **DISPOSITIF INTERFACE PERFECTIONNE D'INJECTION**
VERBESSERTE EINSPRITZSCHNITTSTELLENVORRICHTUNG
IMPROVED INJECTION INTERFACE DEVICE

(30) Priorité: 16.07.2009 FR 0954940
(43) Date de publication de la demande: 23.05.2012
(73) Titulaire: Airbus Operations (S.A.S.), 31060 Toulouse (FR)
(72) Inventeur: BLOT, Philippe, F-44000 Nantes (FR); CHANTEUX, Joël, F-44340 Bouguenais (FR); THOMAZEAU, Laurent, F-44310 Saint Philibert De Grand Lieu (FR); GIRAUDET, Thierry, F-85300 Sallertaine (FR); GUILLOU, Romuald, F-44310 Saint Colomban (FR); LUTUN, Xavier, F-44340 Bouguenais (FR)
(86) Numéro de dépôt international: PCT/FR2010/051480
(87) Numéro de publication internationale: WO 2011/007099

(56) Documents cités:
- WO-A1-2006/005110
- FR-A5- 2 079 486
- US-A- 5 709 413

## Description

La présente invention concerne un dispositif interface perfectionné pour raccorder un tube d'injection sur une élément de moule notamment pour de l'injection basse pression de résines ou de l'injection de produits silicones ou de tout autre produit pâteux.

L'injection basse pression de résines dans un moule fait appel à un tube raccordé par un moyen d'interface permettant à la résine de s'écouler dans le moule. Le document US-A-5709413 décrit un dispositif selon le préambule de la revendication 1.

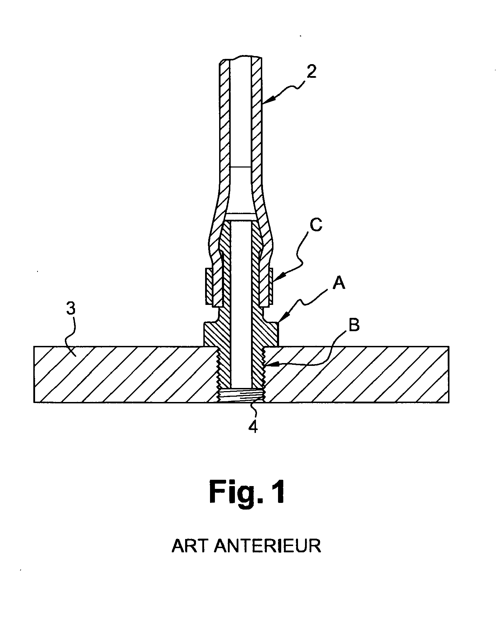

Un moyen d'interface connu est représenté à la figure 1.

Ce moyen d'interface est constitué d'un raccord A qui comporte une première extrémité munie d'un segment tubulaire sur lequel un tube 2 est fixé au moyen d'un collier de serrage C et comporte une seconde extrémité vissée dans un trou taraudé B du moule.

Pour maintenir une étanchéité au niveau de l'extrémité vissée, on entoure le filetage du moyen d'interface avec un film ou ruban téflon (marque déposée).

Ce dispositif d'interface comporte comme défauts d'avoir une étanchéité perfectible au niveau du filetage, de risquer une usure du filetage dans le moule lorsque des démontages fréquents sont nécessaires pour nettoyer le raccord et, comme la fixation du tube amenant la résine est réalisé par un collier de serrage, des précautions particulières sont nécessaires pour éviter un pincement du tube.

En outre, les difficultés de nettoyage de ce dispositif peuvent entraîner une dégradation de la surface d'étanchéité.

La présente invention perfectionne un tel dispositif interface pour le rendre plus fiable au niveau de son étanchéité et plus facile à monter et/ou démonter pour son nettoyage ou son remplacement éventuel.

Pour ce faire, la présente invention propose un dispositif interface entre un tube d'injection et un moule pourvu d'un trou d'injection caractérisé en ce qu'il comporte une terminaison pour tube d'injection, comportant un embout s'insérant dans une extrémité du tube et une bague d'étanchéité enfilée autour du tube, et un moyen de maintien et de serrage de la terminaison, adapté à se visser dans un support solidaire du moule et disposé autour du trou d'injection et à assurer une étanchéité entre une extrémité d'injection de l'embout et une surface d'étanchéité du moule au niveau du trou d'injection, l'assemblage démontable comportant une douille à visser pourvue d'une face d'appui sur la bague d'étanchéité.

La douille à visser est prolongée vers ladite extrémité du tube par un réceptacle se vissant dans ledit support et la douille à visser et le réceptacle sont des pièces séparées munies de filetages complémentaires.

Selon un mode de réalisation avantageux, le réceptacle constitue une chemise de maintien radial de l'embout et d'adaptation de diamètre entre le support et l'embout.

Avantageusement, l'embout comporte un premier segment tubulaire s'insérant dans l'extrémité du tube et la bague d'étanchéité enfilée autour du tube vient comprimer le tube sur ledit premier segment tubulaire sous l'action de la douille à visser.

Préférablement, l'embout comporte un second segment tubulaire formant une collerette de centrage et de butée de l'embout.

Selon un premier mode de réalisation, l'embout comporte une extrémité d'injection de profil conique complémentaire d'un profil conique du trou d'injection formant ladite surface d'étanchéité.

Dans ce cas, la face de sortie de l'embout affleure avantageusement la surface intérieure du moule.

Selon un second mode de réalisation, l'embout comporte une face de sortie d'un produit injecté adaptée pour s'appliquer contre la face externe du moule entourant le trou d'injection et constituant ladite surface d'étanchéité.

Dans ce cas, la face de sortie de l'embout comporte avantageusement une gorge de réception d'un joint périphérique d'étanchéité.

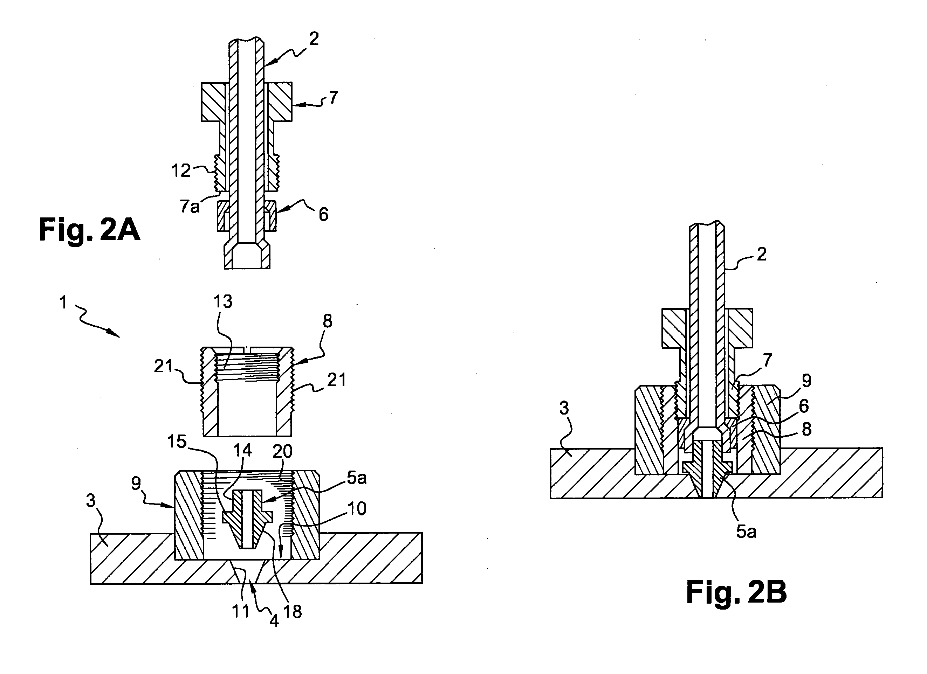

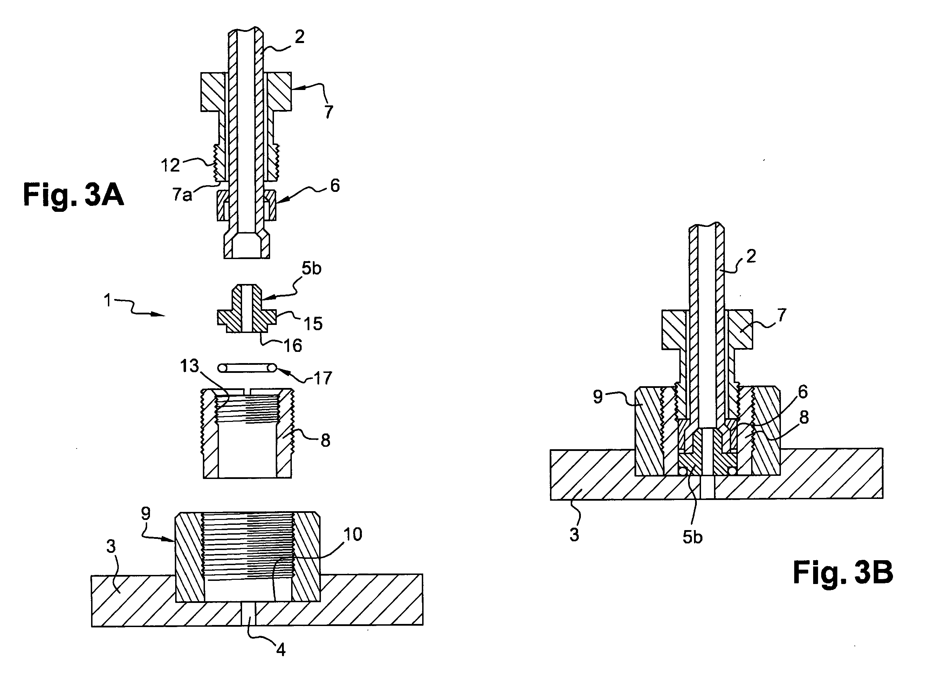

D'autres caractéristiques et avantages de l'invention seront apparents à la lecture de la description qui suit d'un exemple de réalisation non limitatif de l'invention en référence aux dessins qui représentent:
en figure 1: un dispositif d'injection de l'art antérieur;
en figure 2A: une vue en coupe éclaté d'un premier exemple de réalisation de dispositif selon l'invention;
en figure 2B: une vue en coupe du dispositif de la figure 2 monté;
en figure 3A: une vue en coupe éclaté d'un second exemple de réalisation de dispositif selon l'invention;
en figure 3B: une vue en coupe du dispositif de la figure 3 monté;

Un premier exemple du dispositif d'interface perfectionné de l'invention est représenté à la figure 2A.

Le dispositif interface 1 est destiné à raccorder de manière démontable un tube amenant un produit à injecter tel qu'une résine avec un trou d'injection 4 réalisé dans un moule.

Selon la présente invention, le dispositif interface comporte une terminaison pour tube d'injection, comportant un embout 5a s'insérant dans l'extrémité du tube 2 et une bague d'étanchéité 6 enfilée autour du tube.

La bague comporte un profil interne adapté à presser le tube sur la partie 14 de l'embout insérée dans le tube.

Le dispositif comporte en outre un moyen 7, 8 moyen de maintien et de serrage de la terminaison adapté à maintenir la terminaison en pression contre une partie du moule et de serrer la terminaison sur le tube.

Ce moyen est adapté à se visser dans un support 9 solidaire du moule et disposé autour du trou d'injection 4.

Il comporte selon l'exemple une douille à visser 7 et un réceptacle 8 se vissant lui même dans ledit support 9.

La douille à visser 7 et le réceptacle 8 sont des pièces séparées munies de filetages complémentaires 12, 13

Le réceptacle 8 dans lequel se visse la douille 7 permet de réduire le diamètre autour de la terminaison constituée de l'embout et de la bague il assure aussi une interface interchangeable en cas d'usure du filetage interne de ce réceptacle suite au montage et démontage fréquent de la douille.

Il est aussi concevable dans le cadre de l'invention que la douille se visse directement dans le support 9 mais dans ce cas, l'espace autour de l'embout est réduit ce qui pose des problèmes pour nettoyer la zone autour du trou si un débordement de la résine se produisait. Dans ce cas la maintenance en cas d'usure du filetage interne du support 9 est rendue plus difficile.

En outre, dans le cas de démontages fréquents de la douille, l'utilisation du réceptacle 8 muni d'un filetage externe 21 et vissé dans le support 9 évite une usure du filetage 20 du support, le démontage/remontage sollicitant les filetages 12 et 13 entre la douille et le réceptacle.

Pour appliquer l'embout sur le moule, la douille 7 est pourvue d'une face 7a d'appui sur la bague d'étanchéité 6.

Selon cet exemple de réalisation, l'embout 5a comporte une extrémité d'injection de profil conique 18 complémentaire d'un profil conique 11 du trou d'injection formant ladite surface d'étanchéité.

Le dispositif assemblé est représenté en figure 2B.

Lorsque l'on visse la douille dans le réceptacle lui même vissé dans le support 9, on appuie sur la bague 6 ce qui maintient le tube en pression sur l'embout et rend la liaison étanche entre l'embout et le tube.

En outre, lorsque l'on visse la douille la terminaison constituée de la bague et de l'embout est serrée entre la surface supérieure 10 du moule et la face d'appui 7a ce qui fait que le vissage de la douille permet en outre d'assurer l'étanchéité entre une extrémité d'injection de l'embout et une surface 11 d'étanchéité du moule au niveau du trou d'injection.

Selon cet exemple, la surface d'étanchéité entre la terminaison d'injection de l'embout et le trou d'injection est la surface conique 11 du trou contre laquelle porte la terminaison conique 18 de l'embout.

Toujours dans cet exemple la face de sortie de l'embout affleure la surface intérieure du moule et c'est l'embout qui délivre le produit tel que la résine à injecter directement dans le moule.

Cette configuration à l'avantage que si la résine vient à se solidifier, il suffit de dévisser la douille, retirer l'embout 5a et le tube 2 ainsi que la bague 6, puis de remplacer cet ensemble et revisser la douille pour rendre le dispositif de nouveau fonctionnel.

L'embout ainsi que la bague peuvent dans ce cas être avantageusement réalisés en matériau plastique aisément remplaçable à faible coût.

L'exemple de la figure 3A diffère de celui de la figure 2 en ce que l'embout 5b comporte une face de sortie 16 d'un produit injecté adaptée pour s'appliquer contre la face externe 10 du moule entourant le trou d'injection qui constitue la surface d'étanchéité entre l'embout et le moule.

Selon cet exemple, la face de sortie 16 de l'embout comporte une gorge de réception d'un joint périphérique d'étanchéité 17 qui évite la sortie du matériau à injecter entre l'embout et le moule.

Le montage de ce second mode de réalisation est représenté à la figure 3B.

Dans ce cas, l'étanchéité au niveau de la jonction du tube 2 et de l'embout 5b ainsi que l'étanchéité entre l'embout et le moule est toujours réalisé par le vissage de la douille dans le réceptacle 8 qui constitue une chemise de maintien radial de l'embout 5b et d'adaptation de diamètre entre le support 9 et l'embout.

Par contre, c'est le trou réalisé dans le moule 3 qui constitue la buse d'injection de la matière à injecter.

Le trou 4 peut dans cet exemple être très légèrement conique de sorte que si une carotte de résine se solidifie en fin d'injection, cette carotte puisse être retirée avec l'embout d'injection ou par traction par l'extérieur du moule.

Dans cette configuration, l'embout peut notamment être un embout métallique plus robuste qu'un embout plastique et résistant à des pressions d'injection plus importantes.

Que ce soit dans l'exemple de la figure 2A ou dans l'exemple de la figure 3A, l'embout 5a, 5b comporte un premier segment tubulaire 14 s'insérant dans l'extrémité du tube 2 et la bague d'étanchéité 6 enfilée autour du tube vient comprimer le tube sur ce premier segment tubulaire sous l'action de la douille à visser.

Dans le cas de l'exemple des figures 3A et 3B l'embout 5b comporte un second segment tubulaire 15 formant une collerette de centrage de l'embout dans le réceptacle 8 et par rapport au trou 4.

Dans le cas des figures 2A et 2B, le second segment tubulaire forme un épaulement permettant de guider l'embout dans le réceptacle 8 avant que les faces coniques 18 et 11 viennent en contact.

Le dispositif interface de l'invention utilisant un moyen de maintien et de serrage en forme de douille a visser permet un démontage et un montage manuel rapide du dispositif interface d'injection tout en garantissant une étanchéité efficace pour une injection basse pression ou par gravité.

Le réceptacle 8 du dispositif de l'invention constitue une chemise de maintien radial de l'embout 5a, 5b, d'adaptation de diamètre entre le support 9 et l'embout et constitue avantageusement un moyen d'interchangeabilité en cas d'usure du filetage 13.

L'invention n'est pas limitée aux exemples représentés et notamment l'extrémité d'injection de l'embout peut être conformée en buse d'injection de formes diverses tout en restant dans le cadre de la protection déterminée par les revendications.

## Revendications

1. Dispositif interface (1), entre un tube d'injection (2) et un moule (3) pourvu d'un trou d'injection (4), le dispositif interface comportant une terminaison pour ledit tube d'injection pourvue d'un embout (5a, 5b) adapté à s'insérer dans une extrémité du tube (2), comportant en outre une bague d'étanchéité (6) adaptée à s'enfiler autour du tube et qui comporte un moyen (7, 8) de maintien et de serrage de la terminaison, adapté à se visser dans un support (9), solidaire du moule et disposé autour du trou d'injection (4), et à assurer une étanchéité entre une extrémité d'injection de l'embout et une surface (10, 11) d'étanchéité du moule au niveau du trou d'injection, le moyen de maintien et de serrage formant un assemblage démontable comportant une douille à visser (7) pourvue d'une face (7a) d'appui sur la bague d'étanchéité (6) le dispositif interface étant **caractérisé en ce que** la douille à visser est prolongée vers ladite extrémité du tube par un réceptacle (8) adapté à se visser dans ledit support (9), la douille à visser (7) et le réceptacle (8) étant des pièces séparées munies de filetages complémentaires (12, 13).

2. Dispositif interface (1) selon la revendication 1 **caractérisé en ce que** le réceptacle (8) constitue une chemise de maintien radial de l'embout (5a, 5b).

3. Dispositif interface (1) selon l'une quelconque des revendications précédentes, **caractérisé en ce que** l'embout (5a, 5b) comporte un premier segment tubulaire (14) s'insérant dans l'extrémité du tube (2), **en ce que** la bague d'étanchéité (6) enfilée autour du tube vient comprimer le tube sur ledit premier segment tubulaire sous l'action de la douille à visser.

4. Dispositif interface (1) selon la revendication 3, **caractérisé en ce que** l'embout (5a, 5b) comporte un second segment tubulaire (15) formant une collerette de centrage de l'embout.

5. Dispositif interface (1) selon la revendication 3 ou 4, **caractérisé en ce que** l'embout comporte une extrémité d'injection de profil conique (18) complémentaire d'un profil conique (11) du trou d'injection formant ladite surface d'étanchéité.

6. Dispositif interface (1) selon la revendication 5, **caractérisé en ce que** la face de sortie de l'embout affleure la surface intérieure du moule.

7. Dispositif interface (1) selon la revendication 3 ou 4, **caractérisé en ce que** l'embout (5b) comporte une face de sortie (16) d'un produit injecté adaptée pour s'appliquer contre la face externe (10) du moule entourant le trou d'injection et constituant ladite surface d'étanchéité.

8. Dispositif interface (1) selon la revendication 7, **caractérisé en ce que** la face de sortie (16) de l'embout comporte une gorge de réception d'un joint périphérique d'étanchéité (17).

## Patentansprüche

1. Schnittstellenvorrichtung (1), zwischen einem Einspritzrohr (2) und einer Form (3), die mit einer Einspritzöffnung (4) versehen ist, wobei die Schnittstellenvorrichtung einen Abschluss für das Einspritzrohr aufweist, der mit einem Endstück (5a, 5b) versehen ist, das geeignet ist, in ein Ende des Rohres (2) eingeführt zu werden, wobei sie außerdem einen Dichtungsring (6) aufweist, der geeignet ist, um um das Rohr geschoben zu werden und der ein Mittel (7, 8) zum Halten und Klemmen des Abschlusses aufweist, das geeignet ist, in einen Träger (9) geschraubt zu werden, der mit der Form fest verbunden ist und um die Einspritzöffnung (4) angeordnet ist, und um eine Dichtheit zwischen einem Einspritzende des Endstücks und einer Flächendichtung (10, 11) der Form auf der Ebene der Einspritzöffnung zu gewährleisten, wobei das Mittel zum Halten und Klemmen eine zerlegbare Baugruppe bildet, die eine Schraubhülse (7) aufweist, die mit einer Fläche (7a) der Auflage auf dem Dichtungsring (6) versehen ist, wobei die Schraubhülse in Richtung des Endes des Rohres durch eine Aufnahmevertiefung (8) verlängert ist, die geeignet ist, in den Träger (9) geschraubt zu werden, wobei die Schraubhülse (7) und die Aufnahmevertiefung (8) getrennte Teile sind, die mit komplementären Gewinden (12, 13) versehen sind.

2. Schnittstellenvorrichtung (1) nach Anspruch 1, **dadurch gekennzeichnet, dass** die Aufnahmevertiefung (8) eine radiale Haltehülse des Endstücks (5a, 5b) bildet.

3. Schnittstellenvorrichtung (1) nach einem der vorhergehenden Ansprüche, **dadurch gekennzeichnet, dass** das Endstück (5a, 5b) ein erstes röhrenförmiges Segment (14) aufweist, das in das Ende des Rohres (2) eingeführt wird, wobei der Dichtungsring (6), der um das Rohr geschoben ist, das Rohr auf dem ersten röhrenförmigen Segment unter Einwirkung der Schraubhülse komprimiert.

4. Schnittstellenvorrichtung (1) nach Anspruch 3, **dadurch gekennzeichnet, dass** das Endstück (5a, 5b) ein zweites röhrenförmiges Segment (15) aufweist, das einen Zentrierbund des Endstücks bildet.

5. Schnittstellenvorrichtung (1) nach Anspruch 3 oder 4, **dadurch gekennzeichnet, dass** das Endstück ein Einspritzende mit konischem Profil (18) zusätzlich zu einem konischen Profil (11) des Einspritzlochs aufweist, wobei es die Abdichtungsfläche bildet.

6. Schnittstellenvorrichtung (1) nach Anspruch 5, **dadurch gekennzeichnet, dass** die Austrittsfläche des Endstücks die Innenfläche der Form bündig abschließt.

7. Schnittstellenvorrichtung (1) nach Anspruch 3 oder 4, **dadurch gekennzeichnet, dass** das Endstück (5b) eine Austrittsfläche (16) eines eingespritzten Produktes aufweist, die geeignet ist, an der Außenfläche (10) der Form, die die Einspritzöffnung umgibt und dabei Abdichtungsfläche bildet, anzuliegen.

8. Schnittstellenvorrichtung (1) nach Anspruch 7, **dadurch gekennzeichnet, dass** die Austrittsfläche (16) des Endstücks eine Nut zum Aufnehmen eines umlaufenden Dichtungselements (17) aufweist.

## Claims

1. Interface device (1) forming the interface between an injection tube (2) and a mould (3) provided with an injection hole (4), the interface device comprising a termination for said injection tube provided with an end piece (5a, 5b) designed to be inserted into one end of the tube (2), further comprising a sealing ring (6) designed to be slipped around the tube and which comprises a means (7, 8) for retaining and clamping the termination, which means is designed to be screwed into a support (9) secured to the mould and arranged around the injection hole (4), and to provide sealing between an injection end of the end-piece and a sealing surface (10, 11) of the mould in the region of the injection hole, the retaining and clamping means forming a dissociable assembly comprising a screw-on bushing (7) provided with a bearing face (7a) for bearing against the sealing ring (6), the interface device being **characterized in that** the screw-on bushing is extended towards the said end of the tube by a receptacle (8) designed to be screwed into the said support (9), the screw-on bushing (7) and the receptacle (8) being separate components provided with complementary screw threads (12, 13).

2. Interface device (1) according to Claim 1, **characterized in that** the receptacle (8) constitutes a sleeve that retains the end-piece (5a, 5b) radially.

3. Interface device (1) according to either one of the preceding claims, **characterized in that** the end piece (5a, 5b) has a first tubular segment (14) that is inserted in the end of the tube (2), **in that** the sealing ring (6) slipped around the tube compresses the tube onto the said first tubular segment under the action of the screw-on bushing.

4. Interface device (1) according to Claim 3, **characterized in that** the end-piece (5a, 5b) has a second tubular segment (15) that forms a flange for centring the end piece.

5. Interface device (1) according to Claim 3 or 4, **characterized in that** the end piece has an injection end of conical profile (18) that complements a conical profile (11) of the injection hole forming said sealing surface.

6. Interface device (1) according to Claim 5, **characterized in that** the outlet face of the end piece lies flush with the interior surface of the mould.

7. Interface device (1) according to Claim 3 or 4, **characterized in that** the end piece (5b) has an outlet face (16) for an injected product, which face is designed to press against the external face (10) of the mould surrounding the injection hole and constituting the said seal surface.

8. Interface device (1) according to Claim 7, **characterized in that** the outlet face (16) of the end piece comprises a groove for accommodating a peripheral seal (17).
